# EUROPEAN PATENT SPECIFICATION

(11) **EP 3 939 684 B1**
(45) Date of publication and mention of the grant of the patent: **08.10.2025**
(21) Application number: 19918618.0
(22) Date of filing: 24.06.2019
(51) Int. Cl.: B01D 25/12, B01D 25/164

(54) **A NOVEL HEATING FILTER PLATE**
EINE NEUARTIGE HEIZFILTERPLATTE
UNE NOUVELLE PLAQUE FILTRANTE CHAUFFANTE

(30) Priority: 14.03.2019 CN 201910194449; 14.03.2019 CN 201920326612 U
(43) Date of publication of application: 19.01.2022
(73) Proprietor: ZHEJIANG FUJIE INTELLIGENT EQUIPMENT CO., LTD., Huzhou City, Zhejiang 313203 (CN); SHANGHAI CEO ENVIRONMENTAL PROTECTION TECHNOLOGY CO., LTD., Shanghai-200438 (CN)
(72) Inventor: XU, Meiliang, Huzhou, Zhejiang 200438 (CN); LEI, Zhitian, Huzhou, Zhejiang 313203 (CN); LU, Yufei, Huzhou, Zhejiang 313203 (CN); HAN, Jinliang, Huzhou, Zhejiang 313203 (CN); FU, Zhibing, Huzhou, Zhejiang 313203 (CN); QU, Xianwei, Huzhou, Zhejiang 313203 (CN)
(74) Representative: Canzler & Bergmeier Patentanwälte Partnerschaft mbB
(86) International application number: PCT/CN2019/092505
(87) International publication number: WO 2020/181683

(56) References cited:
- WO-A2-2008/031401
- CN-A- 101 175 542
- CN-A- 106 422 455
- CN-A- 106 422 455
- CN-A- 109 745 746
- CN-A- 109 745 746
- CN-U- 203 763 941
- CN-U- 206 152 427
- CN-U- 208 583 039
- DE-A1- 3 819 047

## Description

### BACKGROUND OF THE PRESENT INVENTION

### FIELD OF INVENTION

The present invention relates to the field of filter presses, and in particular, to a novel heating filter plate.

### DESCRIPTION OF RELATED ARTS

A filter press, like it is for example described by CN 106 422 455 A, is a commonly used device for solid-liquid separation, which is widely used in various industries such as chemicals, pharmaceuticals, metallurgy, dyes, food, brewing, and environmental protection. There are many kinds of filter plates applied to the filter presses. The filter plates may be divided into: common filter plates, washing filter plates, diaphragm filter plates, heating filter plates, and the like according to functions. Filter plates with different functions may be used in conjunction. For example, diaphragm filter plates can be used in conjunction with heating filter plates to achieve filtration and drying. CN 106 422 455 A describes a multifunctional filter plate that comprises a core plate of a flat plate structure. Filter plate frames are fixedly arranged at the outer edges of the left side and the right side of the core plate, electrode heating plates are fixedly arranged between the core plate and the filter plate frames and a feeding hole is penetrating through the electrode heating plates and the core plate in the left-right direction. A material filling cavity communicating with the feeding hole is formed between the inner circumferential surface of each filter plate frame and the outer side face of the corresponding electrode heating plate. Each electrode heating plate is provided with a plurality of protruding parts, which protrude outwards and are arranged in the corresponding material filling cavity. An inner water flow groove is formed in the inner side of each protruding part. The left outer side face and the right outer side face of the core plate are provided with a plurality of outer water flow grooves. The inner water flow grooves and the outer water flow grooves are communicated to form a heating cavity, and the electrode heating plates are connected with a power source through wires. Filter cakes in the material filling cavities can be subjected to heating dehydration and electrodialytic deep dehydration through the electrode heating plates, so that the moisture content of the filter cakes is further lowered.

Further, a basic structure of the heating filter plate in the related art includes: a filter plate body, filter chambers, a heating surface and a hot medium flow channel, wherein the filter chambers are arranged on the front and back sides of the filter plate body in a thickness direction of the filter plate body, the heating surface is formed on a part of the filter plate body at a bottom of the filter chamber, and the hot medium flow channel inside the filter plate body is located on an inner side of the heating surface . When a heating medium circulates in the hot medium flow channel, a filter cake in the filter chamber is heated by the heating surface. For the heating filter plate of the foregoing structure, reference may be made to the Chinese utility model patent published as CN204261402U. However, for requirements made by customers of further shortening a drying period and decreasing running energy consumption of the drying, the heating filter plate of the foregoing structure obviously cannot meet the requirements.

### SUMMARY OF THE PRESENT INVENTION

In view of the foregoing disadvantages in the related art, an objective of the present invention is to provide a novel heating filter plate that can further shorten a drying period.

To achieve the foregoing objective, the present invention provides a novel heating filter plate according to claim 1.

Further, there are a plurality of the filtrate through-holes; each of the filtrate through-holes is in communication with the filter chamber through a filtrate connecting hole group; and each of the filtrate connecting hole group comprises a filtrate connecting sink and a filtrate connecting inclined hole, where both the filtrate connecting sink and the filtrate connecting inclined hole are provided on a back surface of the filter frame facing the heat-conducting panel; two ends of the filtrate connecting sink are respectively in communication with the filter chamber and the filtrate through-hole, and two ends of the filtrate connecting inclined hole are respectively in communication with the filter chamber and the filtrate through-hole.

Further, a first collecting chute and a second collecting chute are provided on a front surface of the heat-conducting panel facing the filter chamber, where the first collecting chute and the second collecting chute are distributed at two ends of the filtrate chute in an extension direction of the filtrate chute; a plurality of the filtrate chutes comprise two edge filtrate chutes located at edges of the heat-conducting panels; the first collecting chute can extend across at least an end of each of the remaining filtrate chute other than the edge filtrate chutes in an extension direction of the first collecting chute, and the second collecting chute can extend across at least another end of each of the remaining filtrate chute other than the edge filtrate chutes in an extension direction of the second collecting chute; and both an end of the filtrate connecting sink and an end of the filtrate connecting inclined hole extend to the first collecting chute or the second collecting chute, and both another end of the filtrate connecting sink and another end of the filtrate connecting inclined hole extend to the filtrate through-hole.

Further, a plurality of the filtrate chutes comprise the two edge filtrate chutes located at edges of the heat-conducting panels, and a plurality of short filtrate chutes arranged in an extension direction of the filtrate chute are provided on a back surface of the filter frame facing the heat-conducting panel; an end of the short filtrate chute extends to the edge filtrate chute, and another end of the short filtrate chute extends to the filter chamber.

Further, a heat-conducting medium inlet and a heat-conducting medium outlet are provided on the core panel, where both the heat-conducting medium inlet and the heat-conducting medium outlet are in communication with the heat-conducting cavity through a heat-conducting medium connecting hole group; and each of the heat-conducting medium connecting hole group comprises a heat-conducting medium connecting transverse hole and a heat-conducting medium connecting inclined hole, where both the heat-conducting medium connecting transverse hole and the heat-conducting medium connecting inclined hole are provided inside the core panel; the heat-conducting medium inlet or the heat-conducting medium outlet are provided at an end of the heat-conducting medium connecting transverse hole, another end of the heat-conducting medium connecting transverse hole extends to an end of the heat-conducting medium connecting inclined hole, and another end of the heat-conducting medium connecting inclined hole is in communication with the heat-conducting cavity.

Further, a first flow chute and a second flow chute are provided on a front surface of the core panel facing the heat-conducting panel, where the first flow chute and the second flow chute are distributed at two ends of the heat-conducting medium chute in an extension direction of the heat-conducting medium chute; the first flow chute extends across an end of each of the heat-conducting medium chutes in an extension direction of the first flow chute, the second flow chute extends across another end of each of the heat-conducting medium chutes in an extension direction of the second flow chute, and the other end of the heat-conducting medium connecting inclined hole extends to the first flow chute or the second flow chute.

Further, the heat-conducting medium inlet is located on an upper side of the heat-conducting medium outlet, and the heat-conducting medium inlet and the heat-conducting medium outlet are diagonally distributed.

Further, the novel heating filter plate further comprises a connecting flange disposed at the feed hole, where both the filter frame and the connecting flange are tightly pressed and fixed to the core panel; and the heat-conducting panel comprises a panel main body part of an annular structure, where a panel outer peripheral connecting part extends straight outward from an outer edge of the panel main body part, and a panel inner peripheral connecting part extends straight inward from an inner edge of the panel main body part; the concave part, the heat-conducting main body part, the filtrate chute, and the heat-conducting medium chute are all provided on the panel main body part; the panel outer peripheral connecting part is clamped and fixed between the core panel and the filter frame, and the panel inner peripheral connecting part is clamped and fixed between the core panel and the connecting flange.

Further, a plurality of protruding diversion blocks circumferentially arranged along the connecting flange are disposed on the connecting flange, and a feed channel is formed between two adjacent diversion blocks; two ends of the feed channel are respectively in communication with the filter chamber and the feed hole.

Further, a first sealing ring on an outer peripheral side of the filtrate through-hole is disposed between the core panel and the filter frame, a second sealing ring on an outer peripheral side of the heat-conducting panel is disposed between the core panel and the filter frame, a third sealing ring adjacent to an outer edge of the heat-conducting panel is disposed between the core panel and the heat-conducting panel, and a fourth sealing ring adjacent to an inner edge of the heat-conducting panel is disposed between the core panel and the heat-conducting panel.

Further, both the core panel and the filter frame are made of heat-resistant polypropylene, and the heat-conducting panel is made of metal.

As described above, the novel heating filter plate of the present invention has the following beneficial effects:

In the present invention, a filtrate in the filter chamber is discharged through the filtrate through-hole, a heat-conducting medium is conducted to the heat-conducting cavity, and heat is transferred to a filter cake in the filter chamber through the heat-conducting panel to achieve drying. Particularly, the heat-conducting panel is formed by the concave part and the heat-conducting main body part adjacent to each other, so that the entire heat-conducting panel has a bending structure; and in combination of the width of the heat-conducting main body part is greater than the width of the concave part, thereby an effective contact area between the heat-conducting panel and the filter cake is effectively increased, the heat-conducting efficiency is improved, and further a drying period is shortened and running energy consumption of the drying is decreased.

### BRIEF DESCRIPTION OF THE DRAWINGS

Fig. 1 is a front view of a novel heating filter plate according to this application.
Fig. 2 is a left view of Fig. 1.
Fig. 3 is a right view of Fig. 1.
Fig. 4 is a top view of Fig. 1.
Fig. 5 is a cross-sectional view of Fig. 1 along an A-A direction.
Fig. 6 is a cross-sectional view of Fig. 1 along a B-B direction.
Fig. 7 is an enlarged view of circle C in Fig. 6.

### Description of symbols of components

1 - core panel
11 - heat-conducting medium inlet
12 - heat-conducting medium outlet
13 - heat-conducting medium connecting transverse hole
131 - upper heat-conducting medium connecting transverse hole
132 - lower heat-conducting medium connecting transverse hole
14 - heat-conducting medium connecting inclined hole
141 - upper heat-conducting medium connecting inclined hole
142 - lower heat-conducting medium connecting inclined hole
15 - first flow chute
16 - second flow chute
17 - intermediate flow chute
18 - concave region
2 - filter frame
21 - filtrate connecting sink
211 - upper filtrate connecting sink
212 - lower filtrate connecting sink
22 - filtrate connecting inclined hole
221 - upper filtrate connecting inclined hole
222 - lower filtrate connecting inclined hole
23 - short filtrate chute
3 - heat-conducting panel
31 - concave part
32 - heat-conducting main body part
33 - filtrate chute
331 - edge filtrate chute
34 - heat-conducting medium chute
35 - first collecting chute
36 - second collecting chute
37 - panel main body part
38 - panel outer peripheral connecting part
39 - panel inner peripheral connecting part
4 - filter chamber
5 - feed hole
6 - filtrate through-hole
7 - heat-conducting cavity
8 - connecting flange
81 - diversion block
82 - feed channel
91 - first sealing ring
92 - second sealing ring
93 - third sealing ring
94 - fourth sealing ring

### DETAILED DESCRIPTION OF THE PREFERRED EMBODIMENTS

The following describes implementations of the present invention by using specific embodiments. A person skilled in the art may easily understand other advantages and effects of the present invention from the content disclosed in this specification.

It should be noted that the structures, proportions, sizes, and the like shown in the drawings of the specification, in coordination with the content disclosed in the specification, are only used to help a person skilled in the art to read and understand, and they are not intended to limit the conditions under which the present invention can be implemented and therefore have no technical significance. Any modifications to the structure, changes to the proportional relationship or the adjustment on the size should fall within the scope of the technical content disclosed in the present invention without affecting the effects and the objectives that can be achieved by the present invention. In addition, the terms such as "upper", "lower', "left", "right", "middle", and "a" mentioned in this specification are also merely for facilitating clear descriptions, but are not intended to limit the scope of implementation of the present invention. Without substantially changing the technical contents, changes or adjustments of relative relationships thereof should also fall within the scope of implementation of the present invention.

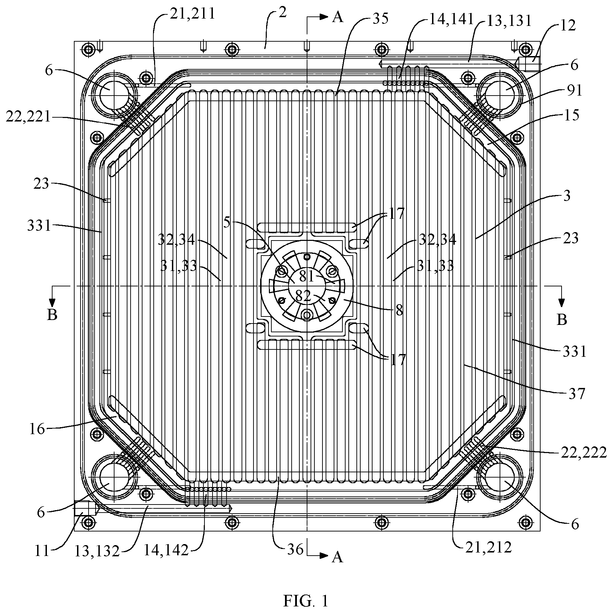

A novel heating filter plate applied to a filter press is provided in this application. During use, the novel heating plate is mainly used in conjunction with a diaphragm filter plate with the same specification to complete processes such as filtration, back-blowing, pressing, and vacuum drying. For ease of description, in the following embodiments, a definition of each direction is as follows: a thickness direction of the novel heating filter plate is defined as a front-back direction, a width direction (or referred to as a length direction) of the novel heating filter plate is defined as a left-right direction, and a height direction of the novel heating filter plate is defined as an up-down direction. Therefore, in the view shown in Fig. 1, a left side and a right side of a paper respectively indicate a left direction and a right direction, an upper side and a lower side of the paper respectively indicate an up direction and a down direction, and a front surface and a back surface of the paper respectively indicate a front direction and a back direction.

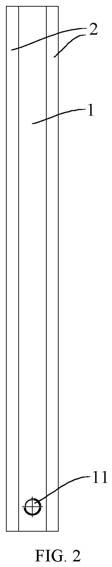

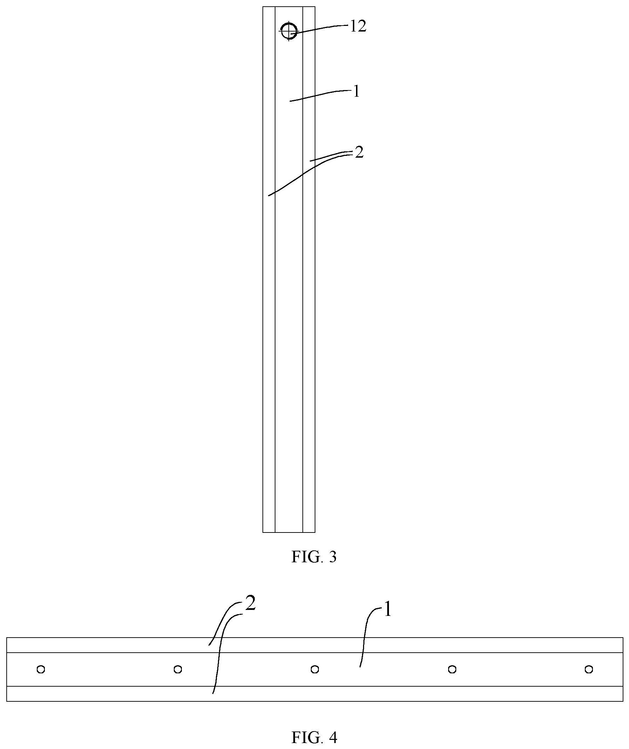

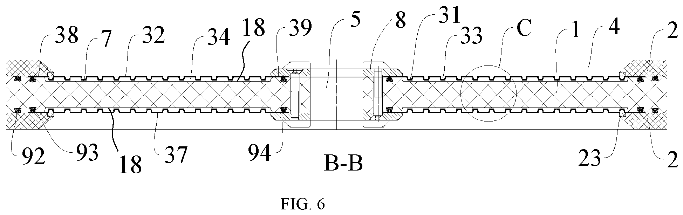

As shown in Fig. 1 to Fig. 6, the novel heating filter plate comprises a core panel 1, filter frames 2 fixedly arranged on the front and back sides of the core panel 1 in a thickness direction of the core panel 1 and located at an outer edge of the core panel 1, heat-conducting panels 3 fixedly arranged on the front and back sides of the core panel 1 in the thickness direction of the core panel 1, filter chambers 4 formed by cavities on inner sides of the filter frames 2 and the heat-conducting panels 3, a feed hole 5 running through the core panel 1 and the heat-conducting panel 3 from front to back and in communication with the filter chamber 4, and a filtrate through-hole 6 running through the core panel 1 and the filter frame 2 from front to back and in communication with the filter chamber 4.The core panel 1 is flat square-shaped and has a solid structure, and an outer peripheral contour of the core panel 1 is consistent and flush with an outer peripheral contour of the filter frame 2. The filter chambers 4 are located on the front and back sides of the core panel 1 and are also located on the sides of the heat-conducting panels 3 facing away from the core panel 1. An inner peripheral surface of the filter frame 2 constitutes an outer peripheral surface of the filter chamber 4, a part of a front surface of the heat-conducting panel 3 facing away from the core panel 1 constitutes a bottom surface of the filter chamber 4, and therefore the heat-conducting panel 3 is fixedly arranged on a bottom of the filter chamber 4 and covers a bottom of the filter chamber 4. A heat-conducting cavity 7 for a heat-conducting medium to circulate is formed between the heat-conducting panel 3 and the core panel 1, and the filter chamber 4 and the heat-conducting cavity 7 are blocked by the heat-conducting panel 3.

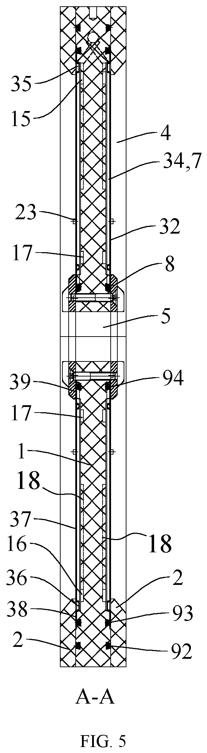

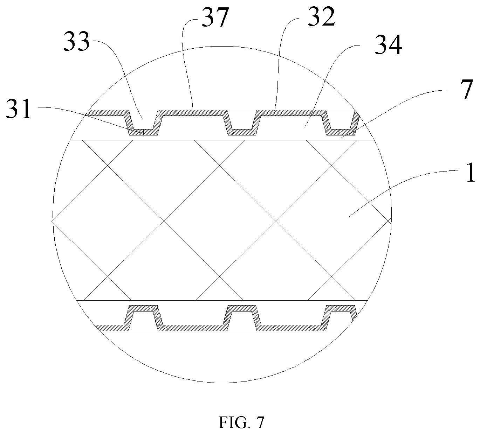

Particularly, as shown in Fig. 5 to Fig. 7, the heat-conducting panel 3 has a plurality of concave parts 31 recessed toward the core panel 1 and a heat-conducting main body part 32 connected between two adjacent concave parts 31. The width of the heat-conducting main body part 32 is greater than the width of the concave part 31. The heat-conducting panel 3 has a filtrate chute 33 in communication with the filter chamber 4 on the side of the concave part 31 facing the filter chamber 4, where an extension direction of the filtrate chute 33 is consistent with an extension direction of the concave part 31. A heat-conducting medium chute 34 constituting part of the heat-conducting cavity 7 is formed on the side of the heat-conducting main body part 32 of the heat-conducting panel 3 facing away from the filter chamber 4, where an extension direction of the heat-conducting medium chute 34 is consistent with an extension direction of the heat-conducting main body part 32.

In this application, a filtrate in the filter chamber 4 is discharged through the filtrate through-hole 6, the heat-conducting medium is conducted to the heat-conducting cavity 7, and heat is transferred to a filter cake in the filter chamber 4 through the heat-conducting panel 3to achieve drying. Particularly, the heat-conducting panel 3 is formed by the concave part 31 and the heat-conducting main body part 32 adjacent to each other, the concave part 31 and the heat-conducting main body part 32 make the entire heat-conducting panel 3 a bending structure, and in combination of the width of the heat-conducting main body part 32 is greater than the width of the concave part 31 which results in the width of the heat-conducting medium chute 34 is relatively large, thereby an effective contact area between the heat-conducting panel 3 and the filter cake is effectively increased, the heat-conducting efficiency is improved, and further a drying period is shortened and running energy consumption of the drying is decreased. In addition, in a case that the entire heat-conducting panel 3 has a bending structure, the structural strength thereof is enhanced, thereby effectively resisting impacts of materials and having a long service life.

As shown in Fig. 1, the plurality of concave parts 31 and the plurality of heat-conducting main body parts 32 on the heat-conducting panel 3 are spaced at intervals in the left-right direction, and both the concave parts 31 and the heat-conducting main body parts 32 extend vertically in the up-down direction, so that both the filtrate chute 33 and the heat-conducting medium chute 34 extend vertically in the up-down direction. Therefore, during flowing, the filtrate in the straight-strip filtrate chute 33 has a small resistance and a high speed, and flows more smoothly, so that the filtering can be accelerated, and when a filter cloth for covering the filter chamber 4 is damaged, the filtrate chute 33 extending vertically in the up-down direction also helps clean the heat-conducting panel 3. Similarly, during flowing, the heat-conducting medium in the straight-strip heat-conducting medium chute 34 also has a small resistance and a high speed, and flows more smoothly, and the heat-conducting medium in heat-conducting medium chute 34 is closer to a surface of the heat-conducting panel 3 facing the filter cake, so that the flow rate of the heat-conducting medium close to the surface of the heat-conducting panel 3 is improved, resulting in increasing the temperature difference of front and back surfaces of the heat-conducting panel 3, and accelerating heat transfer, thereby shortening the drying period, and reducing the running energy consumption of the drying.

Further, a fixing structure of the heat-conducting panel 3 is: as shown in Fig 1, Fig. 5, and Fig. 6, the novel heating filter plate further comprises a connecting flange 8 disposed at front and back ends of the feed hole 5, the feed hole 5 runs through the connecting flange 8 from front to back, and both the filter frame 2 and the connecting flange 8 are tightly pressed and fixed to the core panel 1 through a plurality of screws; and the heat-conducting panel 3 comprises a panel main body part 37 of an annular structure, where a panel outer peripheral connecting part 38 extending straight outward from an outer edge of the panel main body part 37, and a panel inner peripheral connecting part 39 extending straight inward from an inner edge of the panel main body part 37; the concave part 31, the heat-conducting main body part 32, the filtrate chute 33, and the heat-conducting medium chute 34 are all provided on the panel main body part 37; both the panel outer peripheral connecting part 38 and the panel inner peripheral connecting part 39 are of a straight panel-shaped structure, the panel outer peripheral connecting part 38 is located and fixedly clamped between the core panel 1 and the filter frame 2, and the panel inner peripheral connecting part 39 is located and fixedly clamped between the core panel 1 and the connecting flange 8; thereby respectively fixing two heat-conducting panels 3 to the front and back sides of the core panel 1, and ensuring that the heat-conducting panel 3 covers the bottom of the filter chamber 4. In the plurality of screws for fixing the connecting flange 8 and the core panel 1, some screws are screwed in and tightened from front to back, and other screws are screwed in and tightened from back to front, thus enhancing the connection strength among the core panel 1, the connecting flange 8, and the heat-conducting panel 3. Similarly, in the plurality of screws for fixing the filter frame 2 and the core panel 1, some screws are screwed in and tightened from front to back, and other screws are screwed in and tightened from back to front, thus enhancing the connection strength among the core panel 1, the filter frame 2, and the heat-conducting panel 3.

As shown in Fig. 1, a plurality of diversion blocks 81 protruding toward the filter chamber 4 are disposed on a surface of the connecting flange 8 facing the filter chamber 4, where the plurality of diversion blocks 81 are circumferentially arranged along the connecting flange 8 and are located in the filter chamber 4; and a feed channel 82 is formed between two adjacent diversion blocks 81; two ends of the feed channel 82 are respectively in communication with the filter chamber 4 and the feed hole 5. Water-containing materials flowed from the feed hole 5 can be forced to uniformly enter the filter chambers 4 on the front and back sides of the novel heating filter plate from front and back ends of the feed hole 5 through the feed channel 82. Meanwhile, in order to improve the safety when using the novel heating filter plate, a plurality of layers of sealing are provided on the novel heating filter plate. A specific structure is as follows: as shown in Fig 1, Fig. 5, and Fig. 6, a first sealing ring 91 on an outer peripheral side of the filtrate through-hole 6 is disposed between the core panel 1 and the filter frame 2, a second sealing ring 92 on an outer peripheral side of the heat-conducting panel 3 is disposed between the core panel 1 and the filter frame 2, a third sealing ring 93 adjacent to an outer edge of the heat-conducting panel 3 is disposed between the core panel 1 and the heat-conducting panel 3, and a fourth sealing ring 94 adjacent to an inner edge of the heat-conducting panel 3 is disposed between the core panel 1 and the heat-conducting panel 3. Therefore, the second sealing ring 92 is located on an outer peripheral side of the panel outer peripheral connecting part 38, the third sealing ring 93 is located between the core panel 1 and the panel outer peripheral connecting part 38, and the fourth sealing ring 94 is located between the core panel 1 and the panel inner peripheral connecting part 39; and the fourth sealing ring 94, the third sealing ring 93, and the second sealing ring are sequentially arranged from inside to outside in a radial direction of the feed hole 5. In addition, the first sealing ring 91, the second sealing ring 92, the third sealing ring 93, and the fourth sealing ring 94 are O-shaped rings, and are embedded in a dovetail groove on a surface of the core panel 1. Meanwhile, in order to achieve high temperature resistance performance of the novel heating filter plate, both the core panel 1 and the filter frame 2 are mainly made of a heat-resistant polypropylene material, and the heat-conducting panel 3 is made of a metal material with good heat conducting and chemical resistance performance according to filtering materials.

As shown in Fig 1, Fig. 5, and Fig. 6, in this embodiment, there are four filtrate through-holes 6, where the four filtrate through-holes 6 are respectively distributed at four corners of the core panel 1 and the filter frame 2, and each of the filtrate through-holes 6 is in communication with the filter chamber 4 through a filtrate connecting hole group. A preferable structure of the filtrate connecting hole groups is: each of the filtrate connecting hole group comprises a filtrate connecting sink 21 and a filtrate connecting inclined hole 22, where both the filtrate connecting sink 21 and the filtrate connecting inclined hole 22 are provided on a back surface of the filter frame 2 facing the heat-conducting panel 3, so that the filtrate connecting hole group is provided between the filter frame 2 and the panel outer peripheral connecting part 38 of the heat-conducting panel 3; and two ends of the filtrate connecting sink 21 are respectively in communication with the filter chamber 4 and the filtrate through-hole 6, and two ends of the filtrate connecting inclined hole 22 are respectively in communication with the filter chamber 4 and the filtrate through-hole 6. For ease of description, the filtrate connecting sink 21 and the filtrate connecting inclined hole 22 provided on an upper left corner back surface and an upper right corner back surface of the filter frame 2 are respectively defined as an upper filtrate connecting sink 211 and an upper filtrate connecting inclined hole 221, and the filtrate connecting sink 21 and the filtrate connecting inclined hole 22 provided on a lower left corner back surface and a lower right corner back surface of the filter frame 2 are respectively defined as a lower filtrate connecting sink 212 and a lower filtrate connecting inclined hole 222.

Further, as shown in Fig 1, Fig. 5, and Fig. 6, a first collecting chute 35 and a second collecting chute 36 are provided on a front surface of the panel main body part 37 of the heat-conducting panel 3 facing the filter chamber 4, where the first collecting chute 35 and the second collecting chute 36 are distributed at upper and lower ends of the filtrate chute 33 in the extension direction of the filtrate chute 33, and both the first collecting chute 35 and the second collecting chute 36 extend leftward and rightward in an arrangement direction of a plurality of filtrate chutes 33; in the plurality of filtrate chutes 33 arranged leftward and rightward, a filtrate chute 33 on a leftmost side and a filtrate chute 33 on a rightmost side form edge filtrate chutes 331 located at edges of the heat-conducting panels 3; the first collecting chute 35 extends leftward and rightward across upper ends of the remaining filtrate chutes 33 other than the edge filtrate chutes 331 in an extension direction of the first collecting chute 35, and the second collecting chute 36 extends leftward and rightward across lower ends of the remaining filtrate chutes 33 other than the edge filtrate chutes 331 in an extension direction of the second collecting chute 36; both an end of the upper filtrate connecting sink 211 and an end of the upper filtrate connecting inclined hole 221 extend to the first collecting chute 35, and both another end of the upper filtrate connecting sink 211 and another end of the upper filtrate connecting inclined hole 221 extend to the filtrate through-holes 6 at left and right corners located on an upper side of the filter frame 2; and both an end of the lower filtrate connecting sink 212 and an end of the lower filtrate connecting inclined hole 222 extend to the second collecting chute 36, and both another end of the lower filtrate connecting sink 212 and another end of the lower filtrate connecting inclined hole 222 extend to the filtrate through-holes 6 at left and right corners located on a lower side of the filter frame 2.

During filtration, a flow direction of the filtrate in the filter chamber 4 after flowing through the filter cloth is: a part of the filtrate flows upward from the filtrate chute 33 on the heat-conducting panel 3 into the first collecting chute 35, and the filtrate in the first collecting chute 35 is converged into the filtrate through-holes 6 through the upper filtrate connecting sink 211 and the upper filtrate connecting inclined hole 221; meanwhile, another part of the filtrate flows downward from the filtrate chute 33 on the heat-conducting panel 3 into the second collecting chute 36, and the filtrate in the second collecting chute 36 is converged into the filtrate through-holes 6 through the lower filtrate connecting sink 212 and the lower filtrate connecting inclined hole 222; and the filtrate in the filtrate through-holes 6 directly flows to external device pipelines. In addition, as shown in Fig. 1, on left and right sides of the panel main body part 37 of the heat-conducting panel 3, a plurality of short filtrate chutes 23 arranged in an up-down manner are further provided on left and right sides of a back surface of the filter frame 2 facing the heat-conducting panel 3, where an end of the short filtrate chute 23 extends to the edge filtrate chute 331, and another end of the short filtrate chute extends to the filter chamber 4. The edge filtrate chute 331 can increase the quantity of the channels for the filtrate to discharge. Through the short filtrate chute 23, the filtrate in the edge filtrate chute 331 can be converged into the filtrate chute 33 located beside, and then the filtrate can be discharged.

As shown in Fig 1, Fig. 5, and Fig. 6, concave regions 18 recessed toward a direction away from the panel main body part 37 are provided in central regions on the front and back sides of the core panel 1, and the concave regions 18 are also located on one side of the panel main body part 37 of the heat-conducting panel 3 facing away from the filter chamber 4 and facing the heat-conducting panel 3. After the heat-conducting panel 3 is mounted, the panel main body part 37 of the heat-conducting panel 3 and the bottom of the concave region 18 on the core panel 1 jointly form the heat-conducting cavity 7, so that the heat-conducting cavity 7 is a part of the concave regions 18, and all the concave parts 31 on the heat-conducting panel 3 are located in the concave regions 18. A heat-conducting medium inlet 11 and a heat-conducting medium outlet 12 are provided on the core panel 1, and both the heat-conducting medium inlet 11 and the heat-conducting medium outlet 12 are in communication with the heat-conducting cavity 7 through a heat-conducting medium connecting hole group. Each of the heat-conducting medium connecting hole group comprises a heat-conducting medium connecting transverse hole 13 and a heat-conducting medium connecting inclined hole 14, and both the heat-conducting medium connecting transverse hole 13 and the heat-conducting medium connecting inclined hole 14 are provided inside the core panel 1 which provide the heat-conducting medium connecting hole group between the core panel 1 and the panel outer peripheral connecting part 38 of the heat-conducting panel 3. The heat-conducting medium inlet 11 or the heat-conducting medium outlet 12 is provided at an end of the heat-conducting medium connecting transverse hole 13, another end of the heat-conducting medium connecting transverse hole 13 extends to an end of the heat-conducting medium connecting inclined hole 14, and another end of the heat-conducting medium connecting inclined hole 14 is in communication with the heat-conducting cavity 7.

Preferably, as shown in Fig. 1 to Fig. 3, the heat-conducting medium inlet 11 is located on an upper side of the heat-conducting medium outlet 12, and the heat-conducting medium inlet 11 and the heat-conducting medium outlet 12 are diagonally distributed. In this embodiment, the heat-conducting medium inlet 11 is provided at a lower left corner of the core panel 1, and the heat-conducting medium outlet 12 is provided at an upper right corner of the core panel 1. The heat-conducting medium inlet 11 and the heat-conducting medium outlet 12 are threaded holes which facilitates connection to the pipelines. The heat-conducting medium circulates in the heat-conducting cavity 7 from bottom to top and can fill up each corner of the heat-conducting cavity 7, thereby improving the drying efficiency. For ease of description, the heat-conducting medium connecting transverse hole 13 and the heat-conducting medium connecting inclined hole 14 for connecting the heat-conducting medium inlet 11 and the heat-conducting cavity 7 are respectively defined as a lower heat-conducting medium connecting transverse hole 132 and a lower heat-conducting medium connecting inclined hole 142, and the heat-conducting medium connecting transverse hole 13 and the heat-conducting medium connecting inclined hole 14 for connecting the heat-conducting medium outlet 12 and the heat-conducting cavity 7 are respectively defined as an upper heat-conducting medium connecting transverse hole 131 and an upper heat-conducting medium connecting inclined hole 141.

Further, as shown in Fig 1, Fig. 5, and Fig. 6, a first flow chute 15 and a second flow chute 16 are provided on a front surface of the core panel 1 facing the heat-conducting panel 3, where the first flow chute 15 and the second flow chute 16 are distributed at upper and lower ends of the heat-conducting medium chute 34 in the extension direction of the heat-conducting medium chute 34. The first flow chute 15 is provided at an upper end of the concave region 18 on the core panel 1, and the second flow chute 16 is provided at a lower end of the concave region 18 on the core panel 1. Both the first flow chute 15 and the second flow chute 16 extend leftward and rightward in an arrangement direction of the plurality of heat-conducting medium chutes 34; and the first flow chute 15 extends leftward and rightward across upper ends of all the heat-conducting medium chutes 34 in an extension direction of the first flow chute 15, the second flow chute 16 extends leftward and rightward across lower ends of all the heat-conducting medium chutes 34 in an extension direction of the second flow chute 16; another end of the upper heat-conducting medium connecting inclined hole 141 extends to the first flow chute 15, and another end of the lower heat-conducting medium connecting inclined hole 142 extends to the second flow chute 16. Through the first flow chute 15 and the second flow chute 16, the flow rate of the heat-conducting medium in the heat-conducting cavity 7 is uniform, so that the drying effect of the filter cake is more uniform. Preferably, intermediate flow chutes 17 are provided on the front surface of the core panel 1 facing the heat-conducting panel 3, and the intermediate flow chutes 17 are also provided in a central region of the concave region 18 on the core panel 1; the intermediate flow chutes 17 located above the feed hole 5 extend across the lower ends of all the heat-conducting medium chutes 34 blocked by the feed hole 5, and the intermediate flow chutes 17 located below the feed hole 5 extend across the upper ends of all the heat-conducting medium chutes 34 blocked by the feed hole 5, thereby facilitating circulation of the heat-conducting medium.

In the foregoing novel heating filter plate, the core panel 1 has a symmetric structure on the front and back sides, two filter frames 2 fixedly arranged on the front and back sides of the core panel 1 are of a symmetric structure, and two heat-conducting panels 3 fixedly arranged on the front and back sides of the core panel 1 are also of a symmetric structure. When the novel heating filter plate is used in conjunction with the diaphragm filter plate, the novel heating filter plate and the diaphragm filter plate are spaced at intervals from front to back, thereby completing processes such as filtration, back-blowing, pressing, and vacuum drying. Filter chambers 4 are also provided on the front and back sides of the diaphragm filter plate in a thickness direction thereof, and filter cloths capable of covering respective the filter chambers 4 are fixedly arranged on the front and back sides of the novel heating filter plate and the diaphragm filter plate.

The principle of the combination of the novel heating filter plate and the diaphragm filter plate to achieve the function of filtration is that: during filtering, water-containing materials (such as slurry) enter from the feed hole 5 into the filter chambers 4 along the feed channel 82 on the connecting flange 8, and gradually fill up the filter chambers 4. After the filtrate and particles smaller than the pore size of the filter cloths flow through the filter cloths, some of the water-containing materials flow upward along the filtrate chute 33 on the heat-conducting panel 3 into the first collecting chute 35, then sequentially pass through the upper filtrate connecting sink 211, the upper filtrate connecting inclined hole 221, and the filtrate through-hole 6 to the external device pipelines; and other water-containing materials flow downward along the filtrate chute 33 on the heat-conducting panel 3 into the second collecting chute 36, then sequentially pass through the lower filtrate connecting sink 212, the lower filtrate connecting inclined hole 222, and the filtrate through-hole 6 to the external device pipelines; and particles larger than the pore size of the filter cloths are trapped in the filter chambers 4 to form the filter cake.

The principle of the combination of the novel heating filter plate and the diaphragm filter plate to achieve the function of vacuum drying is that: the external device pipelines connected to the filtrate through-holes 6 and a vacuum system are in communication with each other, and when the vacuum system is started, the air in the filter chambers 4 is drawn out through the filtrate through-holes 6 and the filtrate connecting hole groups to enable the filter chambers 4 to be in a necessary vacuum state; thereby the boiling point of the filtrate is decreased, and the vaporization of the filtrate is accelerated. Meanwhile, the heat-conducting medium enters from the heat-conducting medium inlet 11, and flows to the second flow chute 16 after sequentially passing through the lower heat-conducting medium connecting transverse hole 132 and the lower heat-conducting medium connecting inclined hole 142 to fill up the heat-conducting medium chute 34 on a back surface of the heat-conducting panel 3; then the heat-conducting medium converges upward into the first flow chute 15, and then converges into external heat-conducting medium pipelines after sequentially passing through the upper heat-conducting medium connecting inclined hole 141, the upper heat-conducting medium connecting transverse hole 131, and the heat-conducting medium outlet 12. In a flowing process of the heat-conducting medium, the heat is directly transferred to the heat-conducting panel 3 and indirectly transferred to a filter cake layer, so that the moisture in the filter cake layer is heated and vaporized; and vapor pores or cracks that gradually become larger are formed in the filter cake layer causing the acceleration of the vapor to pass through the filter cloths. Then the vapor is collected by an external condensing system after passing through the filtrate connecting hole groups, the filtrate through-holes 6, the external device pipelines, and a vacuum channel of the vacuum system, so that the moisture in the filter cake can be quickly reduced, and further the drying period is shortened and the running energy consumption of the drying is decreased.

In summary, the invention effectively overcomes various defects in the related art and has high industrial value in use.

## Claims

1. A novel heating filter plate, comprising: a core panel (1), filter frames (2) and heat-conducting panels (3) fixedly arranged on the front and back sides of the core panel (1) in a thickness direction of the core panel (1), filter chambers (4) formed by the filter frames (2) and the heat-conducting panels (3) and located on the front and back sides of the core panel (1), a feed hole (5) running through the core panel (1) and the heat-conducting panel (3) from front to back and in communication with the filter chamber (4), and a filtrate through-hole (6) running through the core panel (1) and the filter frame (2) from front to back and in communication with the filter chamber (4); wherein a heat-conducting cavity (7) is formed between the heat-conducting panel (3) and the core panel (1);
the heat-conducting panel (3) has a plurality of concave parts (31) recessed toward the core panel (1) and a plurality of heat-conducting main body parts (32) each connected between two adjacent concave parts (31); the width of the heat-conducting main body part (32) is greater than the width of the concave part (31);
the heat-conducting panel (3) has a plurality of filtrate chutes (33) in communication with the filter chamber (4) on the side of the plurality of concave parts (31) facing the filter chamber (4); and a plurality of heat-conducting medium chutes (34) constituting part of the heat-conducting cavity (7) is formed on the side of the heat-conducting main body part (32) facing away from the filter chamber (4);
the heat-conducting panel (3) comprises a panel main body part (37), wherein the plurality of concave parts (31), the plurality of heat-conducting main body parts (32), the plurality of filtrate chutes (33), and the plurality of heat-conducting medium chutes (34) are all provided on the panel main body part (37);
**characterized in that** a concave region (18) recessed toward a direction away from a panel main body part (37) is provided in a central region of each of the front and back sides of the core panel (1), and the concave region (18) is also located on one side of the panel main body part (37) of the heat-conducting panel (3) facing away from the filter chamber (4) and facing the heat-conducting panel (3), wherein the panel main body part (37) of the heat-conducting panel (3) and the bottom of the concave region (18) on the core panel (1) jointly form the heat-conducting cavity (7), so that the heat-conducting cavity (7) is a part of the concave region (18), and all the concave parts (31) on the heat-conducting panel (3) are located in the concave region (18);
wherein, when the filter plate is installed vertically, the plurality of concave parts (31) and the plurality of heat-conducting main body parts (32) extend vertically in an up-down direction, and the plurality of filtrate chutes (33) and the plurality of heat-conducting medium chutes (34) extend vertically in the up-down direction.

2. The novel heating filter plate according to claim 1, wherein there are a plurality of the filtrate through-holes (6); each of the filtrate through-holes (6) is in communication with the filter chamber (4) through a filtrate connecting hole group; and each of the filtrate connecting hole group comprises a filtrate connecting sink (21) and a filtrate connecting inclined hole (22); both the filtrate connecting sink (21) and the filtrate connecting inclined hole (22) are provided on a back surface of the filter frame (2) facing the heat-conducting panel (3); two ends of the filtrate connecting sink (21) are in communication with the filter chamber (4) and the filtrate through-hole (6) respectively, and two ends of the filtrate connecting inclined hole (22) are in communication with the filter chamber (4) and the filtrate through-hole (6) respectively.

3. The novel heating filter plate according to claim 2, wherein a first collecting chute (35) and a second collecting chute (36) are provided on a front surface of the heat-conducting panel (3) facing the filter chamber (4); the first collecting chute (35) and the second collecting chute (36) are distributed at two ends of the filtrate chute (33) in an extension direction of the filtrate chute (33); a plurality of the filtrate chutes (33) comprise two edge filtrate chutes (331) located at edges of the heat-conducting panels (3); the first collecting chute (35) can extend across at least an end of each of the remaining filtrate chute (33) other than the edge filtrate chutes (331) in an extension direction of the first collecting chute (35), and the second collecting chute (36) can extend across at least another end of each of the remaining filtrate chute (33) other than the edge filtrate chutes (331) in an extension direction of the second collecting chute (36); and both an end of the filtrate connecting sink (21) and an end of the filtrate connecting inclined hole (22) extend to the first collecting chute (35) or the second collecting chute (36), and both another end of the filtrate connecting sink (21) and another end of the filtrate connecting inclined hole (22) extend to the filtrate through-hole (6).

4. The novel heating filter plate according to claim 1, wherein a plurality of the filtrate chutes (33) comprise the two edge filtrate chutes (331) located at edges of the heat-conducting panels (3), and a plurality of short filtrate chutes (23) arranged in an extension direction of the filtrate chute (33) are provided on a back surface of the filter frame (2) facing the heat-conducting panel (3); an end of the short filtrate chute (23) extends to the edge filtrate chute (331), and another end of the short filtrate chute extends to the filter chamber (4).

5. The novel heating filter plate according to claim 1, wherein a heat-conducting medium inlet (11) and a heat-conducting medium outlet (12) are provided on the core panel (1); both the heat-conducting medium inlet (11) and the heat-conducting medium outlet (12) are in communication with the heat-conducting cavity (7) through a heat-conducting medium connecting hole group; and each of the heat-conducting medium connecting hole group comprises a heat-conducting medium connecting transverse hole (13) and a heat-conducting medium connecting inclined hole (14); both the heat-conducting medium connecting transverse hole (13) and the heat-conducting medium connecting inclined hole (14) are provided inside the core panel (1); the heat-conducting medium inlet (11) or the heat-conducting medium outlet (12) are provided at an end of the heat-conducting medium connecting transverse hole (13), another end of the heat-conducting medium connecting transverse hole (13) extends to an end of the heat-conducting medium connecting inclined hole (14), and another end of the heat-conducting medium connecting inclined hole (14) is in communication with the heat-conducting cavity (7).

6. The novel heating filter plate according to claim 5, wherein a first flow chute (15) and a second flow chute (16) are provided on a front surface of the core panel (1) facing the heat-conducting panel (3); the first flow chute (15) and the second flow chute (16) are distributed at two ends of the heat-conducting medium chute (34) in an extension direction of the heat-conducting medium chute (34); the first flow chute (15) extends across an end of each of the heat-conducting medium chutes (34) in an extension direction of the first flow chute (15), the second flow chute (16) extends across another end of each of the heat-conducting medium chutes (34) in an extension direction of the second flow chute (16), and the other end of the heat-conducting medium connecting inclined hole (14) extends to the first flow chute (15) or the second flow chute (16).

7. The novel heating filter plate according to claim 5, wherein the heat-conducting medium inlet (11) is located on an upper side of the heat-conducting medium outlet (12), and the heat-conducting medium inlet (11) and the heat-conducting medium outlet (12) are diagonally distributed.

8. The novel heating filter plate according to claim 1, wherein the novel heating filter plate further comprises a connecting flange (8) disposed at the feed hole (5); both the filter frame (2) and the connecting flange (8) are tightly pressed and fixed to the core panel (1); and the heat-conducting panel (3) comprises a panel main body part (37) of an annular structure; a panel outer peripheral connecting part (38) extends straight outward from an outer edge of the panel main body part (37), and a panel inner peripheral connecting part (39) extends straight inward from an inner edge of the panel main body part (37); the concave part (31), the heat-conducting main body part (32), the filtrate chute (33), and the heat-conducting medium chute (34) are all provided on the panel main body part (37); the panel outer peripheral connecting part (38) is clamped and fixed between the core panel (1) and the filter frame (2), and the panel inner peripheral connecting part (39) is clamped and fixed between the core panel (1) and the connecting flange (8).

9. The novel heating filter plate according to claim 8, wherein a plurality of protruding diversion blocks (81) circumferentially arranged along the connecting flange (8) are disposed on the connecting flange (8), and a feed channel (82) is formed between two adjacent diversion blocks (81); two ends of the feed channel (82) are in communication with the filter chamber (4) and the feed hole (5) respectively.

10. The novel heating filter plate according to claim 1, wherein a first sealing ring (91) on an outer peripheral side of the filtrate through-hole (6) is disposed between the core panel (1) and the filter frame (2), a second sealing ring (92) on an outer peripheral side of the heat-conducting panel (3) is disposed between the core panel (1) and the filter frame (2), a third sealing ring (93) adjacent to an outer edge of the heat-conducting panel (3) is disposed between the core panel (1) and the heat-conducting panel (3), and a fourth sealing ring (94) adjacent to an inner edge of the heat-conducting panel (3) is disposed between the core panel (1) and the heat-conducting panel (3).

11. The novel heating filter plate according to claim 1, wherein both the core panel (1) and the filter frame (2) are made of heat-resistant polypropylene, and the heat-conducting panel (3) is made of metal.

## Patentansprüche

1. Neuartige Heizfilterplatte, die Folgendes umfasst: eine Kernplatte (1), Filterrahmen (2) und Wärmeleitplatten (3), die fest an der Vorder- und Rückseite der Kernplatte (1) in einer Dickenrichtung der Kernplatte (1) angeordnet sind, Filterkammern (4), die durch die Filterrahmen (2) und die Wärmeleitplatte (3) gebildet werden und sich an der Vorder- und Rückseite der Kernplatte (1) befinden, ein Zuführloch (5), das durch die Kernplatte (1) und die Wärmeleitplatte (3) von vorn nach hinten verläuft und mit der Filterkammer (4) in Verbindung steht, und ein Filtratdurchgangsloch (6), das durch die Kernplatte (1) und den Filterrahmen (2) von vorn nach hinten verläuft und mit der Filterkammer (4) in Verbindung steht; wobei ein Wärmeleithohlraum (7) zwischen der Wärmeleitplatte (3) und der Kernplatte (1) gebildet ist; wobei die Wärmeleitplatte (3) eine Vielzahl von konkaven Teilen (31), die in Richtung der Kernplatte (1) ausgespart sind, und eine Vielzahl von Wärmeleithauptkörperteilen (32), die jeweils zwischen zwei benachbarten konkaven Teilen (31) verbunden sind, aufweist; wobei die Breite des Wärmeleithauptkörperteils (32) größer ist als die Breite des konkaven Teils (31); wobei die Wärmeleitplatte (3) eine Vielzahl von Filtratrinnen (33) in Verbindung mit der Filterkammer (4) auf der Seite der Vielzahl von konkaven Teilen (31), die der Filterkammer (4) zugewandt ist, aufweist; und wobei eine Vielzahl von Wärmeleitmediumrinnen (34), die einen Teil des Wärmeleithohlraums (7) bilden, auf der Seite des Wärmeleithauptkörperteils (32), die von der Filterkammer (4) abgewandt ist, gebildet ist;
die Wärmeleitplatte (3) ein Plattenhauptkörperteil (37) umfasst, wobei die Vielzahl von konkaven Teilen (31), die Vielzahl von Wärmeleithauptkörperteilen (32), die Vielzahl von Filtratrinnen (33) und die Vielzahl von Wärmeleitmediumrinnen (34) alle auf dem Plattenhauptkörperteil (37) vorgesehen sind;
**dadurch gekennzeichnet, dass** ein konkaver Bereich (18), der in einer Richtung weg von einem Plattenhauptkörperteil (37) ausgespart ist, in einem zentralen Bereich von jeder der Vorder- und Rückseite der Kernplatte (1) vorgesehen ist, und der konkave Bereich (18) sich auch auf einer Seite des Plattenhauptkörperteils (37) der Wärmeleitplatte (3) befindet, die von der Filterkammer (4) abgewandt ist und der Wärmeleitplatte (3) zugewandt ist, wobei das Plattenhauptkörperteil (37) der Wärmeleitplatte (3) und der Boden des konkaven Bereichs (18) auf der Kernplatte (1) gemeinsam den Wärmeleithohlraum (7) bilden, so dass der Wärmeleithohlraum (7) ein Teil des konkaven Bereichs (18) ist, und alle konkaven Teile (31) auf der Wärmeleitplatte (3) sich in dem konkaven Bereich (18) befinden;
wobei, wenn die Filterplatte vertikal installiert ist, sich die Vielzahl von konkaven Teilen (31) und die Vielzahl von Wärmeleithauptkörperteilen (32) vertikal in einer Oben-Unten-Richtung erstrecken, und sich die Vielzahl von Filtratrinnen (33) und die Vielzahl von Wärmeleitmediumrinnen (34) vertikal in der Oben-Unten-Richtung erstrecken.

2. Neuartige Heizfilterplatte nach Anspruch 1, wobei es eine Vielzahl der Filtratdurchgangslöcher (6) gibt; wobei jedes der Filtratdurchgangslöcher (6) mit der Filterkammer (4) durch eine Filtratverbindungslochgruppe in Verbindung steht; und wobei jede der Filtratverbindungslochgruppe eine Filtratverbindungssenke (21) und ein Filtratverbindungsneigungsloch (22) umfasst; wobei sowohl die Filtratverbindungssenke (21) als auch das Filtratverbindungsneigungsloch (22) auf einer Rückseite des Filterrahmens (2), die der Wärmeleitplatte (3) zugewandt ist, vorgesehen sind; wobei zwei Enden der Filtratverbindungssenke (21) mit der Filterkammer (4) bzw. dem Filtratdurchgangsloch (6) in Verbindung stehen, und zwei Enden des Filtratverbindungsneigungslochs (22) mit der Filterkammer (4) bzw. dem Filtratdurchgangsloch (6) in Verbindung stehen.

3. Neuartige Heizfilterplatte nach Anspruch 2, wobei eine erste Sammelrinne (35) und eine zweite Sammelrinne (36) auf einer Vorderseite der Wärmeleitplatte (3), die der Filterkammer (4) zugewandt ist, vorgesehen sind; wobei die erste Sammelrinne (35) und die zweite Sammelrinne (36) an zwei Enden der Filtratrinne (33) in einer Erstreckungsrichtung der Filtratrinne (33) verteilt sind; wobei eine Vielzahl der Filtratrinnen (33) zwei Randfiltratrinnen (331) umfasst, die sich an Rändern der Wärmeleitplatte (3) befinden; wobei die erste Sammelrinne (35) sich über mindestens ein Ende von jeder der verbleibenden Filtratrinnen (33) außer den Randfiltratrinnen (331) in einer Erstreckungsrichtung der ersten Sammelrinne (35) erstrecken kann, und die zweite Sammelrinne (36) sich über mindestens ein anderes Ende von jeder der verbleibenden Filtratrinnen (33) außer den Randfiltratrinnen (331) in einer Erstreckungsrichtung der zweiten Sammelrinne (36) erstrecken kann; und wobei sich sowohl ein Ende der Filtratverbindungssenke (21) als auch ein Ende des Filtratverbindungsneigungslochs (22) zu der ersten Sammelrinne (35) oder der zweiten Sammelrinne (36) erstrecken, und sich sowohl ein anderes Ende der Filtratverbindungssenke (21) als auch ein anderes Ende des Filtratverbindungsneigungslochs (22) zu dem Filtratdurchgangsloch (6) erstrecken.

4. Neuartige Heizfilterplatte nach Anspruch 1, wobei eine Vielzahl der Filtratrinnen (33) die zwei Randfiltratrinnen (331) umfasst, die sich an Rändern der Wärmeleitplatte (3) befinden, und eine Vielzahl von kurzen Filtratrinnen (23), die in einer Erstreckungsrichtung der Filtratrinne (33) angeordnet sind, auf einer Rückseite des Filterrahmens (2), die der Wärmeleitplatte (3) zugewandt ist, vorgesehen sind; wobei sich ein Ende der kurzen Filtratrinne (23) zu der Randfiltratrinne (331) erstreckt, und sich ein anderes Ende der kurzen Filtratrinne zu der Filterkammer (4) erstreckt.

5. Neuartige Heizfilterplatte nach Anspruch 1, wobei ein Wärmeleitmediumeinlass (11) und ein Wärmeleitmediumauslass (12) auf der Kernplatte (1) vorgesehen sind; wobei sowohl der Wärmeleitmediumeinlass (11) als auch der Wärmeleitmediumauslass (12) mit dem Wärmeleithohlraum (7) durch eine Wärmeleitmediumverbindungslochgruppe in Verbindung stehen; und wobei jede der Wärmeleitmediumverbindungslochgruppe ein Wärmeleitmediumverbindungsquerloch (13) und ein Wärmeleitmediumverbindungsneigungsloch (14) umfasst; wobei sowohl das Wärmeleitmediumverbindungsquerloch (13) als auch das Wärmeleitmediumverbindungsneigungsloch (14) innerhalb der Kernplatte (1) vorgesehen sind; wobei der Wärmeleitmediumeinlass (11) oder der Wärmeleitmediumauslass (12) an einem Ende des Wärmeleitmediumverbindungsquerlochs (13) vorgesehen sind, sich ein anderes Ende des Wärmeleitmediumverbindungsquerlochs (13) zu einem Ende des Wärmeleitmediumverbindungsneigungslochs (14) erstreckt, und sich ein anderes Ende des Wärmeleitmediumverbindungsneigungslochs (14) mit dem Wärmeleithohlraum (7) in Verbindung steht.

6. Neuartige Heizfilterplatte nach Anspruch 5, wobei eine erste Strömungsrinne (15) und eine zweite Strömungsrinne (16) auf einer Vorderseite der Kernplatte (1), die der Wärmeleitplatte (3) zugewandt ist, vorgesehen sind; wobei die erste Strömungsrinne (15) und die zweite Strömungsrinne (16) an zwei Enden der Wärmeleitmediumrinne (34) in einer Erstreckungsrichtung der Wärmeleitmediumrinne (34) verteilt sind; wobei sich die erste Strömungsrinne (15) über ein Ende von jeder der Wärmeleitmediumrinnen (34) in einer Erstreckungsrichtung der ersten Strömungsrinne (15) erstreckt, sich die zweite Strömungsrinne (16) über ein anderes Ende von jeder der Wärmeleitmediumrinnen (34) in einer Erstreckungsrichtung der zweiten Strömungsrinne (16) erstreckt, und sich das andere Ende des Wärmeleitmediumverbindungsneigungslochs (14) zu der ersten Strömungsrinne (15) oder der zweiten Strömungsrinne (16) erstreckt.

7. Neuartige Heizfilterplatte nach Anspruch 5, wobei der Wärmeleitmediumeinlass (11) auf einer Oberseite des Wärmeleitmediumauslasses (12) angeordnet ist, und der Wärmeleitmediumeinlass (11) und der Wärmeleitmediumauslass (12) diagonal verteilt sind.

8. Neuartige Heizfilterplatte nach Anspruch 1, wobei die neuartige Heizfilterplatte ferner einen Verbindungsflansch (8) umfasst, der an dem Zuführloch (5) angeordnet ist; wobei sowohl der Filterrahmen (2) als auch der Verbindungsflansch (8) fest an der Kernplatte (1) gepresst und befestigt sind; und wobei die Wärmeleitplatte (3) ein Plattenhauptkörperteil (37) mit einer ringförmigen Struktur umfasst; wobei sich ein Plattenaußenumfangsverbindungsteil (38) von einem Außenrand des Plattenhauptkörperteils (37) gerade nach außen erstreckt, und sich ein Platteninnenumfangsverbindungsteil (39) von einem Innenrand des Plattenhauptkörperteils (37) gerade nach innen erstreckt; wobei der konkave Teil (31), der Wärmeleithauptkörperteil (32), die Filtratrinne (33) und die Wärmeleitmediumrinne (34) alle auf dem Plattenhauptkörperteil (37) vorgesehen sind; wobei das Plattenaußenumfangsverbindungsteil (38) zwischen der Kernplatte (1) und dem Filterrahmen (2) eingeklemmt und befestigt ist, und das Platteninnenumfangsverbindungsteil (39) zwischen dem Kernplatte (1) und dem Verbindungsflansch (8) eingeklemmt und befestigt ist.

9. Neuartige Heizfilterplatte nach Anspruch 8, wobei eine Vielzahl von vorstehenden Umlenkungsblöcken (81), die in Umfangsrichtung entlang des Verbindungsflansches (8) angeordnet sind, auf dem Verbindungsflansch (8) angeordnet sind, und ein Zuführkanal (82) zwischen zwei benachbarten Umlenkungsblöcken (81) gebildet wird; wobei zwei Enden des Zuführkanals (82) mit der Filterkammer (4) bzw. dem Zuführloch (5) in Verbindung stehen.

10. Neuartige Heizfilterplatte nach Anspruch 1, wobei ein erster Dichtungsring (91) auf einer Außenumfangsseite des Filtratdurchgangslochs (6) zwischen der Kernplatte (1) und dem Filterrahmen (2) angeordnet ist, ein zweiter Dichtungsring (92) auf einer Außenumfangsseite der Wärmeleitplatte (3) zwischen der Kernplatte (1) und dem Filterrahmen (2) angeordnet ist, ein dritter Dichtungsring (93) benachbart zu einem Außenrand der Wärmeleitplatte (3) zwischen der Kernplatte (1) und der Wärmeleitplatte (3) angeordnet ist, und ein vierter Dichtungsring (94) benachbart zu einem Innenrand der Wärmeleitplatte (3) zwischen der Kernplatte (1) und der Wärmeleitplatte (3) angeordnet ist.

11. Neuartige Heizfilterplatte nach Anspruch 1, wobei sowohl die Kernplatte (1) als auch der Filterrahmen (2) aus wärmebeständigem Polypropylen hergestellt sind, und die Wärmeleitplatte (3) aus Metall hergestellt ist.

## Revendications

1. Plaque filtrante chauffante neuve, comprenant : un plaque central (1), des cadres de filtre (2) et des plaques conducteurs thermiques (3) agencés de manière fixe sur les côtés avant et arrière du plaque central (1) dans une direction d'épaisseur du plaque central (1), des chambres de filtre (4) formées par les cadres de filtre (2) et les plaques conducteurs thermiques (3) et situées sur les côtés avant et arrière du plaque central (1), un trou d'alimentation (5) s'étendant à travers le plaque central (1) et le plaque conducteur thermique (3) de l'avant vers l'arrière et en communication avec la chambre de filtre (4), et un trou de passage du filtrat (6) s'étendant à travers le plaque central (1) et le cadre de filtre (2) de l'avant vers l'arrière et en communication avec la chambre de filtre (4) ; dans laquelle une cavité conductrice thermique (7) est formée entre le plaque conducteur thermique (3) et le plaque central (1) ;
le plaque conducteur thermique (3) a une pluralité de parties concaves (31) en retrait vers le plaque central (1) et une pluralité de parties de corps principal conducteur thermique (32) reliées chacune entre deux parties concaves adjacentes (31) ; la largeur de la partie de corps principal conducteur thermique (32) est supérieure à la largeur de la partie concave (31) ; le plaque conducteur thermique (3) a une pluralité de rigoles de filtrat (33) en communication avec la chambre de filtre (4) sur le côté de la pluralité de parties concaves (31) faisant face à la chambre de filtre (4) ; et une pluralité de rigoles de moyen conducteur thermique (34) constituant une partie de la cavité conductrice thermique (7) est formée sur le côté de la partie de corps principal conducteur thermique (32) faisant face à l'opposé de la chambre de filtre (4) ;
le plaque conducteur thermique (3) comprend une partie de corps principal de plaque (37), dans laquelle la pluralité de parties concaves (31), la pluralité de parties de corps principal conducteur thermique (32), la pluralité de rigoles de filtrat (33), et la pluralité de rigoles de moyen conducteur thermique (34) sont toutes prévues sur la partie de corps principal de plaque (37) ;
**caractérisée en ce qu'**une région concave (18) en retrait vers une direction à l'opposé d'une partie de corps principal de plaque (37) est prévue dans une région centrale de chacun des côtés avant et arrière du plaque central (1), et la région concave (18) est également située sur un côté de la partie de corps principal de plaque (37) du plaque conducteur thermique (3) faisant face à l'opposé de la chambre de filtre (4) et faisant face au plaque conducteur thermique (3), dans laquelle la partie de corps principal de plaque (37) du plaque conducteur thermique (3) et le fond de la région concave (18) sur le plaque central (1) forment conjointement la cavité conductrice thermique (7), de sorte que la cavité conductrice thermique (7) fait partie de la région concave (18), et toutes les parties concaves (31) sur le plaque conducteur thermique (3) sont situées dans la région concave (18) ;
dans laquelle, lorsque la plaque filtrante est installée verticalement, la pluralité de parties concaves (31) et la pluralité de parties de corps principal conducteur thermique (32) s'étendent verticalement dans une direction de haut en bas, et la pluralité de rigoles de filtrat (33) et la pluralité de rigoles de moyen conducteur thermique (34) s'étendent verticalement dans la direction de haut en bas.

2. Plaque filtrante chauffante neuve selon la revendication 1, dans laquelle il y a une pluralité de trous de passage de filtrat (6) ; chacun des trous de passage de filtrat (6) est en communication avec la chambre de filtre (4) à travers un groupe de trous de connexion de filtrat ; et chacun du groupe de trous de connexion de filtrat comprend un puits de connexion de filtrat (21) et un trou incliné de connexion de filtrat (22) ; le puits de connexion de filtrat (21) et le trou incliné de connexion de filtrat (22) sont tous deux prévus sur une surface arrière du cadre de filtre (2) faisant face au plaque conducteur thermique (3) ; deux extrémités du puits de connexion de filtrat (21) sont en communication avec la chambre de filtre (4) et le trou de passage de filtrat (6) respectivement, et deux extrémités du trou incliné de connexion de filtrat (22) sont en communication avec la chambre de filtre (4) et le trou de passage de filtrat (6) respectivement.

3. Plaque filtrante chauffante neuve selon la revendication 2, dans laquelle une première rigole de collecte (35) et une seconde rigole de collecte (36) sont prévues sur une surface avant du plaque conducteur thermique (3) faisant face à la chambre de filtre (4) ; la première rigole de collecte (35) et la seconde rigole de collecte (36) sont réparties au niveau de deux extrémités de la rigole de filtrat (33) dans une direction d'extension de la rigole de filtrat (33) ; une pluralité des rigoles de filtrat (33) comprennent deux rigoles de filtrat de bord (331) situées au niveau des bords des plaques conducteurs thermiques (3) ; la première rigole de collecte (35) peut s'étendre à travers au moins une extrémité de chacune des rigoles de filtrat restantes (33) autres que les rigoles de filtrat de bord (331) dans une direction d'extension de la première rigole de collecte (35), et la seconde rigole de collecte (36) peut s'étendre à travers au moins une autre extrémité de chacune des rigoles de filtrat restantes (33) autres que les rigoles de filtrat de bord (331) dans une direction d'extension de la seconde rigole de collecte (36) ; et à la fois une extrémité du puits de connexion de filtrat (21) et une extrémité du trou incliné de connexion de filtrat (22) s'étendent vers la première rigole de collecte (35) ou la seconde rigole de collecte (36), et à la fois une autre extrémité du puits de connexion de filtrat (21) et une autre extrémité du trou incliné de connexion de filtrat (22) s'étendent vers le trou de passage de filtrat (6).

4. Plaque filtrante chauffante neuve selon la revendication 1, dans laquelle une pluralité des rigoles de filtrat (33) comprennent les deux rigoles de filtrat de bord (331) situées au niveau des bords des plaques conducteurs thermiques (3), et une pluralité de rigoles de filtrat courtes (23) agencées dans une direction d'extension de la rigole de filtrat (33) sont prévues sur une surface arrière du cadre de filtre (2) faisant face au plaque conducteur thermique (3) ; une extrémité de la rigole de filtrat courte (23) s'étend vers la rigole de filtrat de bord (331), et une autre extrémité de la rigole de filtrat courte s'étend vers la chambre de filtre (4).

5. Plaque filtrante chauffante neuve selon la revendication 1, dans laquelle une entrée de moyen conducteur thermique (11) et une sortie de moyen conducteur thermique (12) sont prévues sur le plaque central (1) ; à la fois l'entrée de moyen conducteur thermique (11) et la sortie de moyen conducteur thermique (12) sont en communication avec la cavité conductrice thermique (7) à travers un groupe de trous de connexion de moyen conducteur thermique ; et chacun du groupe de trous de connexion de moyen conducteur thermique comprend un trou transversal de connexion de moyen conducteur thermique (13) et un trou incliné de connexion de moyen conducteur thermique (14) ; à la fois le trou transversal de connexion de moyen conducteur thermique (13) et le trou incliné de connexion de moyen conducteur thermique (14) sont prévus à l'intérieur du plaque central (1) ; l'entrée de moyen conducteur thermique (11) ou la sortie de moyen conducteur thermique (12) sont prévues au niveau d'une extrémité du trou transversal de connexion de moyen conducteur thermique (13), une autre extrémité du trou transversal de connexion de moyen conducteur thermique (13) s'étend vers une extrémité du trou incliné de connexion de moyen conducteur thermique (14), et une autre extrémité du trou incliné de connexion de moyen conducteur thermique (14) est en communication avec la cavité conductrice thermique (7).

6. Plaque filtrante chauffante neuve selon la revendication 5, dans laquelle une première rigole d'écoulement (15) et une seconde rigole d'écoulement (16) sont prévues sur une surface avant du plaque central (1) faisant face au plaque conducteur thermique (3) ; la première rigole d'écoulement (15) et la seconde rigole d'écoulement (16) sont réparties au niveau de deux extrémités de la rigole de moyen conducteur thermique (34) dans une direction d'extension de la rigole de moyen conducteur thermique (34) ; la première rigole d'écoulement (15) s'étend à travers une extrémité de chacune des rigoles de moyen conducteur thermique (34) dans une direction d'extension de la première rigole d'écoulement (15), la seconde rigole d'écoulement (16) s'étend à travers une autre extrémité de chacune des rigoles de moyen conducteur thermique (34) dans une direction d'extension de la seconde rigole d'écoulement (16), et l'autre extrémité du trou incliné de connexion de moyen conducteur thermique (14) s'étend vers la première rigole d'écoulement (15) ou la seconde rigole d'écoulement (16).

7. Plaque filtrante chauffante neuve selon la revendication 5, dans laquelle l'entrée de moyen conducteur thermique (11) est située sur un côté supérieur de la sortie de moyen conducteur thermique (12), et l'entrée de moyen conducteur thermique (11) et la sortie de moyen conducteur thermique (12) sont réparties en diagonale.

8. Plaque filtrante chauffante neuve selon la revendication 1, dans laquelle la plaque filtrante chauffante neuve comprend en outre une bride de connexion (8) disposée au niveau du trou d'alimentation (5) ; à la fois le cadre de filtre (2) et la bride de connexion (8) sont étroitement pressés et fixés au plaque central (1) ; et le plaque conducteur thermique (3) comprend une partie de corps principal de plaque (37) d'une structure annulaire ; une partie de connexion périphérique externe de plaque (38) s'étend directement vers l'extérieur à partir d'un bord externe de la partie de corps principal de plaque (37), et une partie de connexion périphérique interne de plaque (39) s'étend directement vers l'intérieur à partir d'un bord interne de la partie de corps principal de plaque (37) ; la partie concave (31), la partie de corps principal conducteur thermique (32), la rigole de filtrat (33), et la rigole de moyen conducteur thermique (34) sont toutes prévues sur la partie de corps principal de plaque (37) ; la partie de connexion périphérique externe de plaque (38) est serrée et fixée entre le plaque central (1) et le cadre de filtre (2), et la partie de connexion périphérique interne de plaque (39) est serrée et fixée entre le plaque central (1) et la bride de connexion (8).

9. Plaque filtrante chauffante neuve selon la revendication 8, dans laquelle une pluralité de blocs de déviation en saillie (81) agencés de manière circonférentielle le long de la bride de connexion (8) sont disposés sur la bride de connexion (8), et un canal d'alimentation (82) est formé entre deux blocs de déviation adjacents (81) ; deux extrémités du canal d'alimentation (82) sont en communication avec la chambre de filtre (4) et le trou d'alimentation (5) respectivement.

10. Plaque filtrante chauffante neuve selon la revendication 1, dans laquelle une première bague d'étanchéité (91) sur un côté périphérique externe du trou de passage de filtrat (6) est disposée entre le plaque central (1) et le cadre de filtre (2), une deuxième bague d'étanchéité (92) sur un côté périphérique externe du plaque conducteur thermique (3) est disposée entre le plaque central (1) et le cadre de filtre (2), une troisième bague d'étanchéité (93) adjacente à un bord externe du plaque conducteur thermique (3) est disposée entre le plaque central (1) et le plaque conducteur thermique (3), et une quatrième bague d'étanchéité (94) adjacente à un bord interne du plaque conducteur thermique (3) est disposée entre le plaque central (1) et le plaque conducteur thermique (3).

11. Plaque filtrante chauffante neuve selon la revendication 1, dans laquelle à la fois le plaque central (1) et le cadre de filtre (2) sont constitués de polypropylène thermorésistant, et le plaque conducteur thermique (3) est constitué de métal.
